(19) Europäisches Patentamt
European Patent Office
Office européen des brevets

(11) **EP 3 276 771 A1**

(12) **EUROPEAN PATENT APPLICATION**
published in accordance with Art. 153(4) EPC

(43) Date of publication:
**31.01.2018 Bulletin 2018/05**

(51) Int Cl.:
***H02J 3/18*** *(2006.01)*

(21) Application number: **16771441.9**

(22) Date of filing: **16.03.2016**

(86) International application number:
**PCT/ES2016/070172**

(87) International publication number:
**WO 2016/156636 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.03.2015 ES 201530410**

(71) Applicant: **Universidad Carlos III de Madrid
28919 Leganés - Madrid (ES)**

(72) Inventors:
• **RODRÍGUEZ AMENEDO, José Luis
28919 Leganés (ES)**
• **ARNALTES GÓMEZ, Santiago
28919 Leganés (ES)**

(74) Representative: **Herrero & Asociados, S.L.
Cedaceros, 1
28014 Madrid (ES)**

(54) **METHOD AND SYSTEM FOR CONTROLLING VOLTAGE AND FREQUENCY IN AN ISOLATED NETWORK**

(57)    The invention relates to a method for controlling the voltage and frequency in an isolated grid, wherein the isolated grid comprises a busbar (5) that receives energy from at least one wind-driven power generator (1) and outputs same by means of a rectifier (2) towards a DC transmission link (4), and wherein the busbar (5) is connected to a capacitor bank (6). The method allows keeping the magnitude and frequency of the voltage in the busbar (5) constant if the direct component d (9) and quadrature component q (10) of the voltage vector (11) in the busbar (5) are kept constant. This is achieved by controlling the reactive power injected into the busbar (5), and in the event that the rectifier (2) is controlled, by controlling the firing angle of the thyristors.

**FIG. 1**

EP 3 276 771 A1

## Description

Object of the Invention

The present invention relates to a method and a system for regulating the voltage and frequency in an isolated grid, whereby allowing DC electric power transmission. The invention is capable of generating a controlled voltage wave in an isolated grid, by keeping the effective value of the voltage and frequency constant when the isolated grid is connected to another grid by means of a DC link with a rectifier station which may be controlled (thyristor rectifier station) or uncontrolled (diode rectifier station).

State of the Art

The way in which conventional AC electrical grids keep control over voltage and frequency by means of using synchronous generators connected in parallel in different nodes of the electrical power system is known. Control over the frequency is performed by maintaining the balance between the active power generated by the set of generators connected to the grid and the electric power demanded by the loads plus the power of electrical losses due to the passage of electric current. Each synchronous generator has a control element referred to as a governor, the function of which is to increase or reduce the mechanical power of the turbine in the case of a reduction or increase in grid frequency, respectively. Likewise, control over the voltage in the electrical grid connection node of each generator is performed by means of another control element referred to as an automatic voltage regulator, which acts on the exciting current of the generator.

High-voltage DC (HVDC) links have been developed since the middle of the 20th century as an alternative to AC transmission systems in long-distance power lines (HVAC). The technology of substations connecting DC terminals with the AC grid was based on line commutated switches (thyristors), hence this technology is known as HVDC-LCC (Line Commutated Converter). This HVDC technology has as advantages: a) a high transmission capacity with voltages of up to 800 kVDC, b) a high overload capacity, c) fewer losses in conduction and commutation of the circuit breakers, and d) a high technological maturity level. However, it has a series of drawbacks, such as: a) it requires an AC grid at both ends of the link for commutation of the breakers, b) therefore, it cannot contribute to the restoration of the electrical power system in the event of a grid failure, c) it generates voltage and current harmonics that must be compensated for by means of filters, d) the converters absorb reactive power when the firing angle of the thyristors increases.

HVDC-VSC (Voltage Source Converter) technology was developed at the end of the 20th century. AC/DC substations based on this technology use self-commutated breakers arranged in a modular manner in multilevel converters. The advantages of this technology have largely assuaged the drawbacks of HVDC-LCC converters, among which the following should be emphasized: a) the capacity of generating an AC grid with controllable frequency and voltage based on a DC voltage, b) the possibility of restoring the system, c) the use of smaller sized harmonics filters, c) the bidirectional control of the reactive power in the AC grids of the HVDC-VSC link. However, they have as drawbacks some of the advantages attributed to HVDC-LCC links, namely: a) a lower transmission capacity, b) further decreased DC voltages, c) a lower overload capacity, d) more losses in the converters, e) a less mature and, therefore, less reliable technology, and f) a higher cost of the converters.

The integration of offshore wind farms in onshore electric power systems is being proposed today worldwide as an alternative to a reduction in fossil fuel consumption and greenhouse gas emissions. Due in large part to the fact that projected, large offshore farms are located far from the coast, under these circumstances a connection with HVDC links is technically and economically more suitable than an HVAC transmission system. As previously indicated, HVDC-VSC technology has undoubtedly more advantages as regards its control capabilities; it does, however, have clear drawbacks in relation to cost, performance and reliability compared to HVDC-LCC technology.

In the case of a wind farm connected to a DC link, the power flow through the link is unidirectional, i.e., from the wind farm rectifier substation to the inverter station connected to the grid. As discussed, the two technologies that can be used to output the generated wind power are:

> 1) HVDC-VSC technology: in this case, the rectifier station is capable of generating the AC grid of the wind farm based on control over the self-commutated circuit breakers.
> 2) HVDC-LCC technology: the rectifier station uses an uncontrolled rectifier (diode bridge) or a controlled rectifier (thyristor bridge), with an additional device that maintains the voltage and frequency in the AC grid of the wind farm being necessary.

As stated, it is possible to connect a wind farm to a DC link in a more cost-effective, efficient and reliable manner with this technology. It was therefore necessary to develop a method and system of control for electric power transmission in DC links that is capable of maintaining the voltage and frequency in the isolated grid.

References relating to DC power transmission and the method of controlling same in the case corresponding to the use of a controlled thyristor rectifier are known in the state of the art, such as those disclosed in patent documents WO2010/018264, GB2423650, WO2014131454 and in the paper by Fazeli et al., Voltage and frequency Control of Offshore DFIG-based Wind Farms with line commuted HVDC connection, In: PEMD2008, 4th IET Conference on Power Electronics, Machines and Drives, pp. 335-339, 2-4 April 2008.

Patent document WO2010/018264 claims a DC electric power transmission system characterized by a series of elements that are the known elements of an HVDC-LCC rectifier station, such as, for example, the system described in the paper by Fazeli *et al.* Said patent document further claims a method of control by means of which the voltage, frequency and harmonics of the AC bus are modified to control the voltage and current of the DC link, but the characterizing part of the claim fails to disclose the technical features of such method, but rather only a technical effect that bears no relation to the object of the method (controlling the voltage and current of the DC link): it produces a minimum phase difference between the voltage and current of the AC side, eliminates the tap changer of the transformers and reduces or eliminates reactive power compensation systems and filters. It should further be indicated that the mere interconnection of the elements described in the claims does not produce the claimed effects.

Patent document GB2423650 claims a power conversion system similar to the one claimed in WO2010/018264, but applied to a single generator that provides variable voltage and frequency that is connected to an AC collector grid operating at constant voltage and frequency. The connection is performed through a DC link formed by an uncontrolled rectifier connected to the stator of the generator and a step-up inverter connected to the collector grid. Nevertheless, the voltage and frequency of the AC bus of the rectifier are not controlled in this method, but rather this voltage and frequency are variable and imposed by the synchronous generator.

The paper by Fazeli *et al.* describes a distributed control system based on the local control of each wind-driven power generator to maintain the voltage and frequency of an AC grid in an offshore wind farm connected to a DC link by means of an uncontrolled rectifier. The control system described in this patent document establishes the individual frequency and voltage setpoint values of each generator as a ratio that is proportional to the active and reactive power generated by each of them, which is commonly known in the lingo as "frequency and voltage droop method".

Finally, patent document WO2014131454 claims a method for generating the voltage and frequency in an offshore wind farm connected to a DC link by means of a diode rectifier. The method consists of using auxiliary elements to generate the voltage and frequency in the AC grid of the wind farm, such as an auxiliary generator, an auxiliary AC grid or others.

As regards the case corresponding to the use of an uncontrolled diode rectifier, it should be mentioned that in an uncontrolled rectifier, the ratio of AC input voltage to DC output voltage is set and therefore cannot be controlled. It could be said that this is a particular case of a line commutated rectifier, in which the firing angle of the thyristors is set and equal to the value zero. In other words, the static switch commutates as soon as it is directly biased. The generation of AC voltage is nevertheless required for operation.

Description of the Invention

The invention herein described relates to a method and system for controlling the voltage and frequency in an isolated grid, such as an offshore wind farm, connected to the general grid by means of a DC link used in a rectifier station which, as mentioned above, can be controlled or uncontrolled.

Compared to conventional generators, wind-driven power generators on wind farms have the particularity that they work as a power source. In other words, they control the current injected into an electrical grid, so for the operation thereof they require a grid that imposes the effective value and frequency of the voltage in its terminals. On the other hand, the rectifier station of an HVDC-LCC link also requires for its operation a grid that imposes the effective value and frequency of the voltage in its terminals. The foregoing entails it being impossible to connect an offshore wind farm to a rectifier station, since both the wind-driven power generators forming the wind farm and the rectifier station require a voltage having a constant frequency and magnitude for their operation.

For this purpose a capacitor bank will be connected to the busbar connecting the wind farm and rectifier station to one another. It is demonstrated that control over the components of the voltage vector in the busbar in a synchronous reference frame allows, in a decoupled manner, control over the voltage and frequency of the isolated grid. To that end, Park transformation is performed on the instantaneous values of the voltage in the capacitor bank. Control over the direct and quadrature components of the spatial voltage vector (components d-q) obtained as a result of Park transformation will allow control over the voltage and grid frequency, respectively, by acting on components d and q of the currents injected into the capacitor.

Therefore, a first aspect of the invention relates to a method for controlling the voltage and frequency in an isolated grid, wherein the isolated grid comprises a busbar that receives energy from at least one wind-driven power generator and outputs same by means of a rectifier towards a DC transmission link. Furthermore, to allow controlling the voltage and frequency, a capacitor bank connected to the connected busbar is added to this isolated grid. In this context, in order to keep the magnitude and frequency of the voltage in the busbar constant, it is enough to in turn keep the direct component d and quadrature component q of the voltage vector in the busbar constant.

In a preferred embodiment of the invention, the method comprises the step of keeping the quadrature component q of the voltage vector in the busbar at zero, thereby achieving the instantaneous balance of the reactive power in the busbar.

The reactive power balance is preferably achieved by controlling the reactive current injected into the busbar so that the quadrature component of the voltage vector in the busbar is zero. This can be done directly by regulating the reactive power generated by the wind-driven power generator by means of sending to same a suitable reactive power setpoint. It can alternatively be done using a reactive power regulation device connected to said busbar, for example an SVC or a STATCOM.

In a preferred embodiment corresponding to a case in which the rectifier station is a controlled thyristor rectifier, the active power balance is achieved by controlling the firing angle of said thyristors so that said rectifier absorbs all the active power generated by the wind-driven power generator. This can be done directly or indirectly by means of a nested control loop.

Alternatively, in a preferred embodiment corresponding to a case in which the rectifier station is an uncontrolled diode rectifier, the active power balance is automatically reached in a passive manner, a specific value of the AC voltage being established starting from an established DC voltage.

A second aspect of the invention relates to a system for controlling voltage and frequency in an isolated grid capable of carrying out the method of any of the preceding claims. The isolated grid comprises a busbar that receives energy from at least one wind-driven power generator and outputs same by means of a rectifier towards a DC transmission link. Additionally, the system comprises a capacitor bank connected to the busbar to allow the implementation of the method of control described above.

According to preferred embodiments of the invention, the rectifier can be a controlled thyristor rectifier or, alternatively, an uncontrolled diode rectifier.

According to a preferred embodiment, the system further comprises a reactive power regulation device connected to the busbar to perform control over frequency, for example an SVC or a STATCOM.

Brief Description of the Drawings

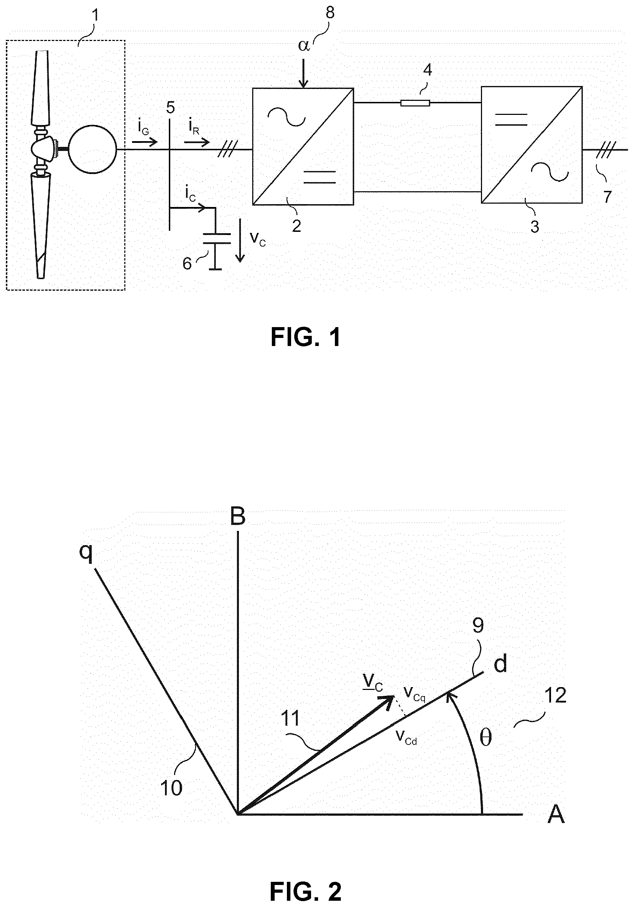

Figure 1, which corresponds to a case in which a controlled thyristor rectifier is used, shows a wind farm represented by a wind-driven power generator (1), connected to a DC transmission system (HVDC), represented by the rectifier station (2) and the inverter station (3), as well as the DC cable (4) linking both stations. The current generated by the wind farm is injected into a busbar (5) in which a capacitor bank (6) is arranged. The busbar feeds the HVDC link rectifier station (2). At the other end of the HVDC link, an inverter station (3) is in charge of injecting the electric power into the electrical grid (7).

Figure 2 shows an explanatory vector diagram corresponding to the configuration of Figure 1 where it can be seen how a voltage having a constant magnitude and frequency is achieved by controlling the component d or direct component $v_{Cd}$ (9) and the component q or quadrature component $v_{Cq}$ (10) of the voltage vector $v_C$ (11) of the capacitor.

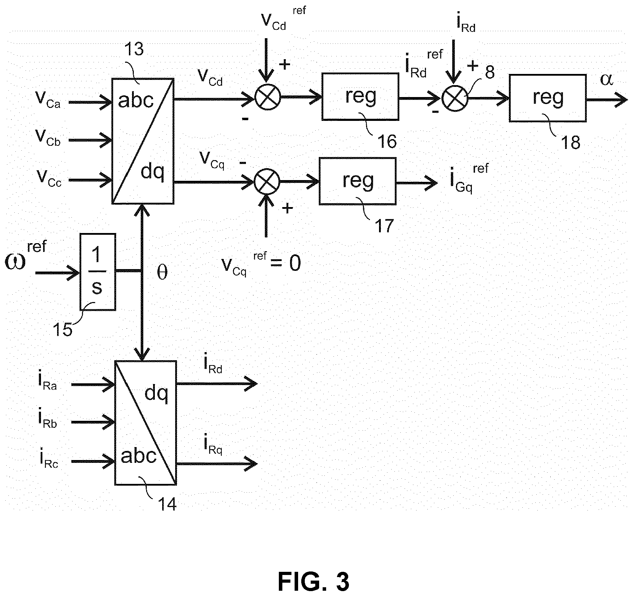

Figure 3 shows the control diagram of the system shown in Figure 1 with the Park transformation blocks for instantaneous voltages $v_{Ca}$, $v_{Cb}$, $v_{Cc}$ (13) and instantaneous currents $i_{Ra}$, $i_{Rb}$, $i_{Rc}$ (14), the angle generator of the synchronous reference system (15), voltage and frequency regulators (16) and (17), respectively, and current regulator of the bridge rectifier (18).

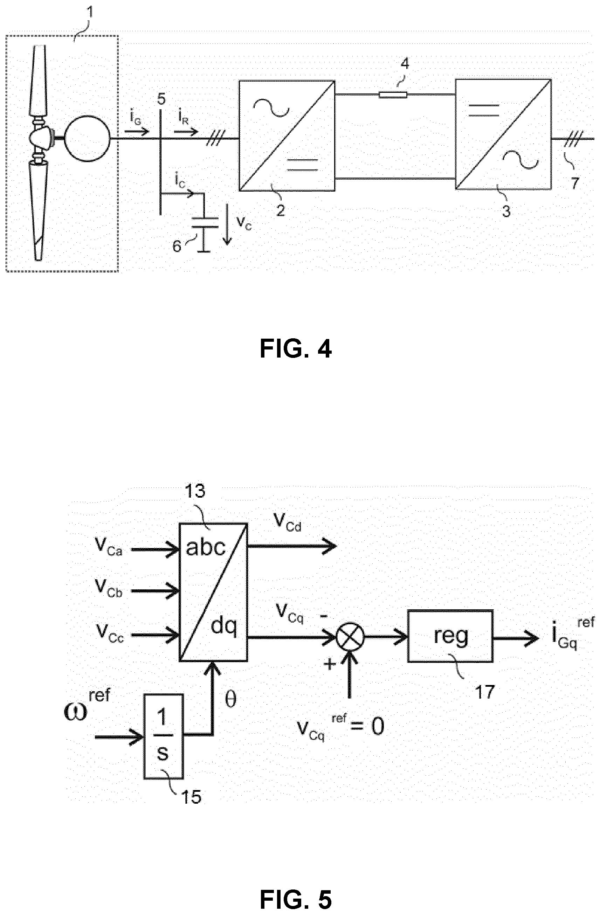

Figure 4 corresponds to a case in which an uncontrolled diode rectifier is used and shows a system with a configuration essentially identical to that shown in Figure 1 except with respect to the rectifier itself, which does not have the input signal for controlling the firing angle $\alpha$.

Figure 5 shows the control diagram of the system shown in Figure 4 with the Park transformation blocks of the instantaneous voltages $v_{Ca}$, $v_{Cb}$, $v_{Cc}$ (13), angle generator of the synchronous reference system (15) and frequency regulator (17). The direct-axis voltage $V_{Cd}$ is set by the voltage of the DC bus of the rectifier and therefore does not require regulation for establishing its value.

Description of Preferred Embodiments

*System with a controlled thyristor rectifier*

As indicated, a first variant of the invention relates to a system that allows controlling the voltage and frequency in an isolated grid by means of a DC link, as in the case of a wind farm connected to the grid by means of an HVDC link with a thyristor rectifier station.

In reference to Figure 1, the present invention solves the indicated problem by means of controlling the magnitude and frequency of the voltage in a capacitor bank (6) suitably arranged between the wind farm (1) and the rectifier station (2). Figure 2 depicts a vector diagram in which the voltage vector in the capacitor bank $v_C$ (11) and its components $v_{Cd}$ and $v_{Cq}$ in a synchronous reference system with direct component d (9) and quadrature component q (10), turning at a speed equal to the reference pulse of the voltage $\omega^{ref}$, has been represented.

The proposed system of control aims the voltage vector of the capacitor in the direction of the synchronous shaft "d". Therefore by maintaining the voltage component $v_{Cq}=0$, a voltage having a constant frequency, equal to the rotation frequency of the synchronous axis "d", is achieved. On the other hand, by keeping the voltage component $v_{Cd}$ constant, a constant value of the magnitude of the voltage in the busbar to which the wind farm and rectifier station are connected is achieved.

On the other hand, in a synchronous reference system "d," the equation of the capacitor is:

$$i_{Cd} = C \frac{dv_{Cd}}{dt} - \omega C v_{Cq}$$

$$i_{Cq} = C \frac{dv_{Cq}}{dt} + \omega C v_{Cd}$$

The first equation indicates that the injection of active current into the capacitor allows controlling the voltage component $v_{Cd}$ and therefore the modulus of the voltage, with the other component being zero. Meanwhile, the second equation indicates that the injection of reactive current into the capacitor allows controlling the voltage component $v_{Cq}$ and therefore the frequency of the voltage. To understand this, it must be taken into account that when the voltage is aimed at the "d" axis, components d-q of the current are equal, respectively, to the active and reactive components of said current. Furthermore, in steady state the component $v_{Cq}$ is zero and the component $v_{Cd}$ is constant and equal to the nominal value of the voltage, so components d and q of the current are what can cause changes in components d-q of the voltage.

Figure 3 depicts a preferred diagram for carrying out the proposed method of control. In this diagram, the three phase voltages in the capacitor bank are measured and transformed (13) into their components d-q in a synchronous reference system. The position of the synchronous reference system θ is obtained directly by means of integrating (15) the desired reference pulse. For example, in a 50 Hz synchronous system, $\omega^{ref}=2 \cdot \pi \cdot 50$ rad/s.

Next the components d-q of the voltage are compared to the established reference values $v_{Cd}^{ref}=v_{nom}$ and $v_{Cq}^{ref}=0$, respectively, and the voltage error is corrected by means of respective current regulators (16) and (17) which will establish the values of active and reactive current to be injected into the capacitor bank.

On the other hand, Kirchhoff's first law in the busbar establishes that the current injected into the capacitor is equal to the current injected into the busbar by the wind farm minus the current taken from the busbar by the rectifier station. Vectorially:

$$i_{Cd} = i_{Gd} - i_{Rd}$$

$$i_{Cq} = i_{Gq} - i_{Rq}$$

Taking into account that with the voltage aimed at the synchronous axis d, the d-axis current is the active current and the q-axis current is the reactive current, the first equation indicates that the injection of active current into the capacitor is equal to the difference of the active current injected by the wind farm into the busbar and the active current taken by the rectifier from the busbar. The second equation expresses that the injection of reactive current into the capacitor is equal to the difference of the reactive current injected by the wind farm into the busbar and the reactive current taken by the rectifier from the busbar.

In steady state, the derivatives of the voltage components in the capacitor are zero, so the preceding equations establish, on one hand, that the active current injected into the capacitor is zero, and therefore, the active current injected into the busbar by the wind farm must be equal to the active current taken by the rectifier, and on the other hand, that the reactive current injected into the capacitor is constant and equal to $\omega \cdot C \cdot v_{cd}$, and therefore the reactive current injected into the busbar by the wind farm must be equal to the reactive current taken by the rectifier minus the constant reactive current injected by the capacitor.

To assure the aforementioned current balance, which in turn enables control over the d- and q-axis voltages, the corresponding regulators generate a current reference for the elements of the installation. Given that the active current injected by the wind farm is a direct consequence of the action of the wind on the wind-driven power generators, this current cannot be used to perform control over direct-axis voltage, so active current balancing is performed by means of controlling the firing angle α (8) of the controlled rectifier (2), which directly affects the control over active current taken by the rectifier.

On the other hand, in the q-axis the reactive current absorbed by the rectifier is a function of the firing angle of the thyristors which can no longer be used as a control variable in this loop since they are used in the preceding loop. For this reason the control over q-axis voltage is performed by means of injecting reactive current into the busbar. This can be done by means of regulating the reactive power of the wind-driven power generators of the wind farm, by sending a suitable reactive power setpoint to each wind-driven power generator, or by means of any other reactive power regulation device connected to the busbar, such as an SVC or a STATCOM.

In summary, the preceding expressions demonstrate that by maintaining the components of the voltage vector at their reference values, $v_{Cd}^{ref}=v_{nom}$ and $v_{Cq}^{ref}=0$, the active power injected by the wind farm is equal to the active power output by the rectifier, and the reactive power injected by the wind farm is equal to the reactive power consumed by the rectifier minus the constant reactive current injected by the capacitor. In other words, the proposed control over voltage and frequency assures at all times the instantaneous balance of active and reactive powers.

When there is a variation in the active power due to a variation in wind speed, there is a transient imbalance of active power in the busbar that is absorbed by the capacitor bank, causing a minor variation in the magnitude of the voltage that is rapidly compensated for by means of the variation in the firing angle of the thyristors according to the proposed regulation diagram. In turn, this action on the direct axis causes a transient imbalance of reactive power in the busbar which, absorbed by the capacitor bank, causes a minor variation in the frequency of the voltage, and therefore the q-axis voltage, that is rapidly compensated for by means of injecting reactive power into the busbar.

*System with an uncontrolled diode rectifier*

In this second variant, the invention relates to a device that allows controlling the voltage and frequency in an isolated grid by means of a DC link, as in the case of a wind farm connected to the grid by means of an HVDC link with an uncontrolled diode rectifier station.

In reference to Figure 4, the present invention solves the indicated problem by means of controlling the magnitude and frequency of the voltage in a capacitor bank (6) suitably arranged between the wind farm (1) and the rectifier station (2).

The vector diagram shown in Figure 2 is still valid for representing in this second variant the voltage vector in the capacitor bank $v_C$ (11) and its components $v_{Cd}$ and $v_{Cq}$ in a synchronous reference system d (9) and q (10), turning at a speed equal to the reference pulse of the voltage $\omega^{ref}$.

The proposed system of control aims the voltage vector of the capacitor in the direction of the synchronous axis "d". Therefore by maintaining the voltage component $v_{Cq}=0$, a voltage having a constant frequency, equal to the rotation frequency of the synchronous axis "d," is achieved. On the other hand, by keeping the voltage component $v_{Cd}$ constant, a constant value of the magnitude of the voltage in the busbar to which the wind farm and the rectifier station are connected is achieved.

On the other hand, in a synchronous reference system "d," the equation of the capacitor is:

$$i_{Cd} = C \frac{dv_{Cd}}{dt} - \omega C v_{Cq}$$

$$i_{Cq} = C \frac{dv_{Cq}}{dt} + \omega C v_{Cd}$$

The first equation indicates that the injection of active current into the capacitor allows controlling the voltage component $v_{Cd}$ and therefore the modulus of the voltage, the other component being zero. The second equation indicates that the injection of reactive current into the capacitor allows controlling the voltage component $v_{Cq}$ and therefore the frequency of the voltage. To understand this, it must be taken into account that when the voltage is aimed at the "d" axis, the components d-q of the current are equal, respectively, to the active and reactive components of said current. Furthermore, in steady state the component $v_{Cq}$ is zero and the component $v_{Cd}$ is constant and equal to the nominal value of the voltage, so components d and q of the current are what can cause changes in the components d-q of the voltage.

Figure 5 depicts a preferred diagram for carrying out the proposed method of control. In this diagram, the three phase voltages in the capacitor bank are measured and transformed (1) into their components d-q in a synchronous reference system. The position of the synchronous reference system θ is obtained directly by means of integrating (15) the desired reference pulse. For example, in a 50 Hz system synchronous, $\omega^{ref}=2\cdot\pi\cdot50$ rad/s.

Next the q components of the voltage are compared to the reference value $v_{Cq}^{ref}=0$ and the voltage error is corrected by means of a current regulator which will establish the value of reactive current to be injected into the capacitor bank.

The fundamental aspect of this second configuration of the present invention consists of realizing that the regulation of the voltage in the d-axis, $v_{Cd}$, is neither necessary nor desirable, because the intrinsic operation of the uncontrolled rectifier and the DC link already establishes the active power balance in the capacitor, which in turn leads to obtaining a specific value of the voltage in the capacitor $v_{Cd}$.

Therefore, Kirchhoff's first law in the busbar establishes that the current injected into the capacitor is equal to the current injected into the busbar by the wind farm minus the current taken from the busbar by the rectifier station. Vectorially:

$$i_{Cd} = i_{Gd} - i_{Rd}$$

$$i_{Cq} = i_{Gq} - i_{Rq}$$

Taking into account that with the voltage aimed at the synchronous axis d, the d-axis current is the active current and the q-axis current is the reactive current, the first equation indicates that the injection of active current into the capacitor is equal to the difference of the active current injected by the wind farm into the busbar and the active current taken by the rectifier of the busbar. The second equation expresses that the injection of reactive current into the capacitor is equal to the difference of the reactive current injected by the wind farm into the busbar and the reactive current taken by the rectifier from the busbar.

In steady state, the derivatives of the voltage components in the capacitor are zero, so the preceding equations establish, on one hand, that the active current injected into the capacitor is zero, and therefore, the active current injected into the busbar by the wind farm must be equal to the active current taken by the rectifier, and on the other hand, that the reactive current injected into the capacitor is constant and equal to $\omega \cdot C \cdot v_{cd}$, and therefore the reactive current injected into the busbar by the wind farm must be equal to the reactive current taken by the rectifier minus the constant reactive current injected into the capacitor.

To assure the aforementioned current balance, which in turn enables control over the d- and q-axis voltages, the q-axis current regulator generates a current reference for the reactive current generating/absorbing elements of the installation. On the other hand, the active current injected by the wind farm is a direct consequence of the action of the wind on the wind-driven power generators; this current cannot be used to perform control over direct-axis voltage, but the active current balancing is performed in a passive manner by the uncontrolled rectifier (2). Indeed, in an uncontrolled rectifier there is a set AC input voltage-to-DC output voltage ratio. With a value of the DC voltage being set in the HVDC link by means of the link inverter, the link rectifier will be blocked when a sufficient value for the AC voltage is reached. In this circumstance, the active current generated by the wind farm will be injected into the capacitor, raising its voltage. The voltage will increase until reaching a value such that the diodes of the uncontrolled rectifier begin conducting. At this time, the active current injected by the wind farm is automatically transferred by the rectifier to the HVDC link, an active current balance in the busbar of the capacitor being established and a set value of the voltage in the capacitor being obtained. By discarding the voltage drop in the diodes, the ratio between the effective value of the AC line input voltage and the mean value of the DC output voltage is: $V_{DC}=1.35 \cdot V_{AC}$. In other words, for a voltage of the HVDC link imposed by the inverter thereof (3), a voltage balance on the AC side of the rectifier, which is given approximately by the preceding expression, will be reached. Starting from this balance, an increase in power generated by the wind-driven power generators of the wind farm would initially produce an increase in the voltage in the capacitor, which would automatically lead to an increase of the current in the HVDC link, with the active current balance on the capacitor being re-established with a new value of the voltage, but in any case limited by the preceding expression.

On the other hand, in the q-axis control over q-axis voltage is performed by means of injecting reactive current into the busbar. This can be done by means of regulating the reactive power of the wind-driven power generators of the wind farm, by sending a suitable reactive power setpoint to each wind-driven power generator, or by means of any other reactive power regulation device connected to the busbar, such as an SVC or a STATCOM.

In summary, the preceding expressions demonstrate that by maintaining the component of the voltage vector in the q-axis at its reference value, $v_{Cq}{}^{ref}=0$, the reactive power injected by the wind farm is equal to the reactive power consumed by the rectifier. On the other hand, the active power balance is automatically imposed by the uncontrolled diode rectifier, obtaining as a result an effective value of the AC voltage. In other words, the proposed control over frequency assures at all times the instantaneous balance of the reactive power, whereas the active power balance imposed by the rectifier assures a specific value of the AC voltage.

## Claims

1. Method for controlling the voltage and frequency in an isolated grid comprising a busbar (5) that receives energy from at least one wind-driven power generator (1) and outputs same by means of a rectifier (2) towards a DC transmission link (4), the busbar (5) being connected to a capacitor bank (6), wherein said method comprises the step of keeping the direct component d (9) and quadrature component q (10) of the voltage vector (11) in the busbar (5) constant in order to keep the magnitude and frequency of the voltage in the busbar (5) constant, respectively, **characterized in that**:

   - the quadrature component q (10) of the voltage vector (11) is kept constant by regulating the reactive current injected into the busbar (5),
   - when the rectifier (2) is an uncontrolled diode rectifier, the direct component d (9) of the voltage vector (11) is automatically regulated in a passive manner, a specific value of the AC voltage being established starting from an established DC voltage, and
   - when the rectifier (2) is a controlled thyristor rectifier, the direct component d (9) of the voltage vector (11) is kept constant by controlling the firing angle (8) of the thyristors so that said rectifier (2) absorbs all the active power generated by the wind-driven power generator (1).

2. Method according to claim 1, wherein control over the reactive current injected into the busbar (5) is performed by means of regulating the reactive power generated by the wind-driven power generator (1).

3. Method according to claim 1, wherein control over the reactive current injected into the busbar (5) is performed by means of a reactive power regulation device connected to said busbar (5).

4. Method according to claim 3, wherein the reactive power regulation device is an SVC or a STATCOM.

5. Method according to any of the preceding claims, wherein control over the firing angle (8) of the thyristors of the rectifier (2) is performed directly or indirectly by means of a subordinate control loop.

**FIG. 1**

**FIG. 2**

**FIG. 3**

# FIG. 4

# FIG. 5

# INTERNATIONAL SEARCH REPORT

| International application No. |
|---|
| PCT/ES2016/070172 |

**A. CLASSIFICATION OF SUBJECT MATTER**

*H02J3/18* (2006.01)
*H02J3/36* (2006.01)
According to International Patent Classification (IPC) or to both national classification and IPC

**B. FIELDS SEARCHED**

Minimum documentation searched (classification system followed by classification symbols)
H02J

Documentation searched other than minimum documentation to the extent that such documents are included in the fields searched

Electronic data base consulted during the international search (name of data base and, where practicable, search terms used)

EPODOC, INVENES

**C. DOCUMENTS CONSIDERED TO BE RELEVANT**

| Category* | Citation of document, with indication, where appropriate, of the relevant passage | Relevant to claim No. |
|---|---|---|
| A | ES 2358816 A1 (UNIV VALENCIA POLITECNICA) 16/05/2011, the whole document. | 1-5 |
| A | Control directo of potencia of convertidores electrónicos conectados a the red. Datasheet [onlínea]. ELOY-GARCÍA CARRASCO, JOAQUÍN .July 2007 [retrieved on 08.06.2015].Retrieved of internet:<a href="http://e">http://e</a>archivo.uc3m.es/bitstream/handle/10016/2371/Tesis_J_Eloy-Garcia.pdf?sequence=1 | 1-5 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | | |
| "P" | document published prior to the international filing date but later than the priority date claimed | "Y" | document of particular relevance; the claimed invention cannot be considered to involve an inventive step when the document is combined with one or more other documents , such combination being obvious to a person skilled in the art |
| | | "&" | document member of the same patent family |

| Date of the actual completion of the international search | Date of mailing of the international search report |
|---|---|
| 26/04/2016 | **(28/04/2016)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | R. Molinera de Diego<br><br>Telephone No. 91 3498536 |

Form PCT/ISA/210 (second sheet) (January 2015)

## INTERNATIONAL SEARCH REPORT

Information on patent family members

| | International application No. |
|---|---|
| | PCT/ES2016/070172 |

| Patent document cited in the search report | Publication date | Patent family member(s) | Publication date |
|---|---|---|---|
| ES2358816 A1 | 16.05.2011 | WO2010018264 A1<br>WO2010018264 A4 | 18.02.2010<br>06.05.2010 |

Form PCT/ISA/210 (patent family annex) (January 2015)

**EP 3 276 771 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010018264 A
- GB 2423650 A
- WO 2014131454 A

**Non-patent literature cited in the description**

- **FAZELI et al.** Voltage and frequency Control of Offshore DFIG-based Wind Farms with line commuted HVDC connection. *PEMD2008, 4th IET Conference on Power Electronics, Machines and Drives,* 02 April 2008, 335-339